(19) Europäisches Patentamt
European Patent Office
Office européen des brevets

(11) Veröffentlichungsnummer: **0 041 240**
**B1**

(12) # EUROPÄISCHE PATENTSCHRIFT

(45) Veröffentlichungstag der Patentschrift: **21.08.85**

(51) Int. Cl.⁴: **C 09 B 67/54**, C 09 B 67/26

(21) Anmeldenummer: **81104096.3**

(22) Anmeldetag: **27.05.81**

(54) **Verfahren zum Spritzfärben von Leder.**

(30) Priorität: **04.06.80 CH 4334/80**
**11.06.80 CH 5351/80**
**06.03.81 CH 1527/81**

(43) Veröffentlichungstag der Anmeldung:
**09.12.81 Patentblatt 81/49**

(45) Bekanntmachung des Hinweises auf die Patenterteilung:
**21.08.85 Patentblatt 85/34**

(84) Benannte Vertragsstaaten:
**BE CH DE FR GB IT LI**

(56) Entgegenhaltungen:
**DE - A - 2 033 989**
**FR - A - 2 124 359**
**FR - A - 2 193 065**
**FR - A - 2 393 874**
**FR - A - 2 416 926**

(73) Patentinhaber: **CIBA-GEIGY AG, Postfach, CH-4002 Basel (CH)**

(72) Erfinder: **Hugelshofer, Paul, Dr., Donnerbaumweg 29, CH-4132 Muttenz (CH)**
Erfinder: **Bruttel, Beat, Dr., Ob den Reben 5, CH-4461 Böckten (CH)**
Erfinder: **Pfenninger, Heinz, Dr., Rebackerweg 30, CH-4411 Lupsingen (CH)**
Erfinder: **Lacroix, Roger, Dr., Rue Vauban 24, F-68300 Village-Neuf (FR)**

(74) Vertreter: **Berg, Wilhelm, Dr. et al, Patentanwälte Dr. Berg Dipl.-Ing. Stapf Dipl.-Ing. Schwabe Dr. Dr. Sandmair Postfach 86 02 45 Stuntzstrasse 16, D-8000 München 86 (DE)**

**EP 0 041 240 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zum Spritzfärben von Leder. Die Spritzfärbung ermöglicht es, Leder sehr schnell in einer gewünschten Nuance ab Zwischenlager zu liefern, einseitige Färbungen auf Leder für ungefütterte Schuhe einzustellen und schon gegerbte, nachgegerbte, gefettete und getrocknete Leder ohne nochmalige Broschur zu färben. Vor allem kann man aber auch durch Spritzfärbung im Faß in einer Grundnuance vorgefärbte Narbenleder auf eine Modenuance einstellen und eine Nuance durch Spritzfärbung auf der Narben- oder Fleischseite korrigieren oder »schönen«.

Zur Verbesserung der Benetzung, der Eindringtiefe und Egalisierung enthalten die Spritzflotten oft erhebliche Mengen an Lösungsmitteln und Emulgatoren, Dispergatoren und anderen Hilfsmitteln. Die Spritzfärbung von Leder stellt sehr hohe Anforderungen an die dafür verwendeten dünnflüssigen Präparate. So müssen sie z. B. mit Wasser, organischen Lösungsmitteln oder deren Gemischen mischbar sein. Ferner müssen bei der Lederapplikation die Farbstoffe gelöst sein oder aber die in Wasser schwerlöslichen Farbstoffe müssen in sehr feiner Verteilung vorliegen. Sie müssen im Gemisch mit den in der Lederspritzfärberei verwendeten Hilfsmitteln verträglich sein und dürfen bei der Verdünnung mit Wasser nicht ausfallen. Es ist außerdem sehr erwünscht, daß diese Flüssigpräparationen über einen längeren Zeitraum (mindestens mehrere Monate) lagerstabil sind. Unerwünschte Kristallbildung oder Sedimentation kann zur Verstopfung und/oder Erosion der Spritzdüsen führen sowie zu broncierten Färbungen, die ungenügende Reibechtheit und verfälschte Nuance aufweisen.

Die DE-A 2 802 326 beschreibt flüssige, u. a. wässrig-organische Farbstoffpräparationen von Metallkomplexfarbstoffen, vorzugsweise von solchen, die in Wasser schwerlöslich bis unlöslich sind und sich zum Teil für die Spritzfärbung von Leder eignen. Wenn man jedoch statt der schwerlöslichen bis unlöslichen Farbstoffe in Wasser gut lösliche Farbstoffe verwendet, so bilden sich nach längerem (einige Monate) häufig Niederschläge bzw. Kristalle, die die oben genannten Nachteile mit sich bringen. Dieser Effekt tritt insbesondere dann auf, wenn die Präparate verhältnismäßig viel Wasser (ca. 10 bis 50%, bezogen auf das Präparat), oder relativ hohe Mengen an Farbstoff enthalten.

Ferner beschreibt die DE-A 2 033 989 stabile, konzentrierte, wasserarme Lösungen von sulfonsäuregruppenhaltigen Metallkomplex-Azofarbstoffen, die mit Wasser mindestens teilweise mischbare organische Lösungsmittel enthalten. Auch bei diesen Lösungen nimmt oft die Lagerstabilität bei zunehmender Wasserlöslichkeit des Farbstoffes bzw. zunehmender Menge an Wasser ab.

Die DE-A 2 204 725 betrifft die Herstellung von rein wäßrigen Farbstofflösungen von u. a. anionischen, wasserlöslichen Farbstoffen mittels einer Membran-Ultrafiltration. Diese Farbstofflösungen sind jedoch nicht für die Lederspritzfärbung geeignet, weil sie mit den in Spritzflotten üblicherweise enthaltenen Lösungsmitteln und/oder Hilfsmitteln Ausfällungen ergeben können. Zudem werden bei dem hier angegebenen Ultrafiltrationsverfahren die klassischen unmodifizierten Membranen verwendet, die relativ leicht verstopft und eine vergleichsweise geringe Durchflußrate haben.

In der GB-A 1 504 261 werden spezifische modifizierte Membranen aus Acetylcellulose beschrieben, die an der Oberfläche gleichmäßige Poren mit einem Durchmesser von 0,5 bis 10 nm aufweisen. Der cut off level derartiger Membranen ist nicht näher spezifiziert. Hinsichtlich deren Verwendbarkeit findet sich lediglich der Hinweis, daß diese u. a. auch zur Reinigung in der Farbstoffherstellung verwendet werden können.

Aufgabe der vorliegenden Erfindung war es, ein Verfahren zum Spritzfärben von Leder zu entwickeln, das unter Verwendung solcher Farbstofflösungen durchgeführt wird, die lagerstabil sind, sich problemlos mit in der Spritzfärberei üblichen Lösungsmitteln verdünnen lassen und vor allem nicht zur Rekristallisation neigen.

Die Lösung dieser Aufgabe besteht darin, zur Spritzfärbung eine solche Farbstofflösung zu verwenden, die erhalten wird, indem man eine wäßrige Lösung bzw. Suspension, mindestens eines anionischen Rohsfarbstoffes zur Abtrennung von Salzen und Synthesenebenprodukten mit Molekulargewichten unter 500 und teilweisen Abtrennung von Wasser über eine halbdurchlässige, asymmetrische, mit polyfunktionellen monomeren oder polymeren Verbindungen modifizierten Membran mit einem cut off level von 300 bis 500 führt, gegebenenfalls trocknet, und mit 15 bis 85 Gew.-%, bezogen auf das fertige Präparat, eines mit Wasser mischbaren, organischen Lösungsmittels und gegebenenfalls weiteren Zusatzmitteln vor und/oder nach dem Durchgang durch die halbdurchlässige Membran versetzt.

Die hyperfiltrierte Farbstofflösung hat einen Inertsalzgehalt unter 1%. Unter inerten Salzen werden solche verstanden, welche durch Neutralisation und/oder Aussalzen des Farbstoffes aus der Synthese herrühren und in der Syntheselösung bzw. -suspension mitgeführt werden, wie Natrium- oder Kaliumsalze, beispielsweise Natrium- bzw. Kaliumchlorid, -sulfat oder -hydrogensulfat, vor allem Natriumchlorid.

Bei den wasserlöslichen anionischen Farbstoffen handelt es sich vor allem um anionische Farbstoffe, welche eine Löslichkeit in Wasser bei Raumtemperatur (20°) von 10 bis 60 oder mehr g/l, vorzugsweise mindestens 30 g/l aufweisen. Es kommen vorzugsweise saure Farbstoffe, wie Metallkomplex-, Chromierungs-, Entwicklung- und Beizenfarbstoffe sowie Reaktivfarbstoffe in Frage. Es handelt sich insbesondere um sulfonsäure- bzw. carbonsäuregruppenhaltige metallfreie oder metallhaltige und metallisierbare Mono-, Dis- und Polyazofarbstoffe, Formazanfarbstoffe, Anthrachinon-, Nitro-, Methin-, saure Triphenylmethan-, Xanthon-, Naphthazarin-, Chinophthalon- und Phthalocyaninfarbstoffe.

Als wasserlösliche Metallkomplexfarbstoffe kommen sulfonsäure- bzw. carbonsäuregruppenhaltige Metallkomplexfarbstoffe, beispielsweise 1 : 1- oder 1 : 2-Metallkomplexe von Azo- oder Azomethinfarbstoffen oder metallisierte Phthalocyanine, insbesondere Kupfer- und Nickelphthalocyanine, in Betracht. Bei den 1 : 1- und 1 : 2-Metallkomplexen handelt es sich vorzugsweise um 1 : 1Nickelkomplexe, 1 : 1-Kobaltkomplexe, 1 : 1-Kupferkomplexe, 1 : 1-Chromkomplexe, 1 : 1-Eisenkomplexe, oder um symmetrische oder asymmetrische 1 : 2-Kobaltkomplexe, 1 : 2-Eisenkomplexe oder 1 : 2-Chromkomplexe von insbesondere o-Carboxy-o'-hydroxy-, o-Hydroxy-o'-amino- oder o,o'-Dihydroxyazofarbstoffen des Benzol-azo-benzol-, Naphthalin-azo-naphthalin-, Benzol-azo-naphthalin-, Benzol-azo-pyrazolon-, Benzol-azo-pyridon- oder Benzol-azo-acet-essigsäureamid-Typs, wobei diese Gruppierungen unsubstituiert oder auch substituiert sein können. Als Substituenten kommen z. B. in Betracht: gegebenenfalls substituierte Sulfonsäureamide oder Sulfone, Halogen oder Nitro.

Die erfindungsgemäß verwendete Kupfer- und Nickelphthalocyanine leiten sich von den üblichen Gemischen verschiedener Sulfonierungsgrade ab und enthalten vorzugsweise 2 bis 3 oder auch 4 sulfatierte Sulfonsäure-$\beta$- oder -$\gamma$-hydroxyalkylamidgruppen, können daneben aber auch einzelne Halogene und einzelne Sulfonsäureamidgruppen enthalten, wobei diese Sulfonsäureamidgruppen am Stickstoff unsubstituiert oder substituiert sein können, beispielsweise durch nieder Alkyl, wie Methyl, Äthyl, Propyl, Butyl, oder niedere Hydroxyalkylgruppen, wie 2-Hydroxyäthyl, 2-Hydroxypropyl, 3-Hydroxypropyl.

Beim vorliegenden Verfahren verwendet man die sulfonsäuregruppenhaltigen Farbstoffe sowie deren Metallkomplexe vorzugsweise in Form ihrer Metallsalze, wie sie bei der Synthese anfallen, z. B. der Kalium-, Magnesium- oder vor allem Natriumsalze. Sie können aber auch in Form ihrer Aminsalze verwendet werdem.

Die Farbstoffe können gegebenenfalls auch in Mischungen mit einander oder gegebenenfalls mit Farbstoffen von einem anderen Typ vorliegen.

Die erfindungsgemäß verwendbaren Farbstoffe sind bekannt und können nach bekannten Methoden hergestellt werden.

Die in der Farbstofflösung in einer Konzentration von 15 bis 85 Gew.-% enthaltenen organischen Lösungsmittel sind mit Wasser mischbar, d. h. sie bilden mit Wasser eine homogene Phase. Sie können allein oder in Gemischen verwendet werden. Vorteilhaft weisen sie einen Siedepunkt von mindestens 80°C auf. Besonders bevorzugt sind beispielsweise die bei Raumtemperatur flüssigen, mehrwertigen Alkohole oder deren Äther und/oder Ester, wie Äthylenglykol, Propylenglykol, Di- und Triäthylenglykol, Tetraäthylenglykol, Glycerin, 2-Methylpentandiol-(2,4), Aethylenglykol-, Propylenglykol- oder Diäthylenglykolmonomethyl-, -monoäthyl- oder -monobutyläther, Triäthylenglykolmonobutyläther, Dipropylenglykol, Glycerin-1,3-di-äthyläther, Diäthylenglykolmonoäthylätheracetat, Diäthylenglykolmonoacetat, Thiodiglykol, Polyäthylenglykole und wasserlösliche Polyäther.

Bevorzugte Lösungsmittel sind ebenfalls Ketone und Hydroxyketone wie Methyläthylketon, Acetonylaceton, insbesondere Diacetonalkohol, gegebenenfalls Äythergruppen aufweisende Monoalkohole wie Isopropylalkohole, Glycerinformal (5-Hydroxy-1,3-dioxan, 5-Hydroxymethyl-1,3-dioxolan), 2-Hydroxymethyltetrahydropyran, insbesondere Tetrahydrofurfurylalkohol, sowie cyclische Äyther und Ester wie Tetrahydrofuran, Dioxan, Glykolformal (1,3-Dioxolan) und Äthylencarbonat [1,3-Dioxolon(2)].

Ferner können als Lösungsmittel verwendet werden Lactame und Lactone wie N-Methylpyrrolidon, Cyclohexylpyrrolidon, 1,5-Dimethylpyrrolidon, insbesondere $\gamma$-Butyrolacton, Ester von aliphatischen Hydroxycarbonsäuren wie Äthyllactat, Äthyloxybutyrat, gegebenenfalls Hydroxygruppen enthaltende Nitrile, wie Acetonitril, $\beta$-Hydroxypropionitril, sowie schwefelhaltige Verbindungen wie gegebenenfalls in $\alpha$- und/oder $\beta$-Stellung durch alkyl- oder Hydroxyalkylgruppen substituierte Derivate des 2,5 Dihydrothiopen-1,1-dioxid (Sulfolen) oder des Tetrahydrothiopen-1,1-dioxid (Sulfolan) oder insbesondere Dimethylsulfoxid. Geeignet sind ferner auch niedrigmolekulare, aliphatische Carbonsäuren wie Ameisensäure, Essigsäure, Milchsäure, Amide von niedrigmolekularen aliphatischen Carbonsäuren wie Formamid, N,N-Dimethylformamid, vorzugsweise jedoch Amide von Carbonsäuren mit mindestens 2 C-Atomen wie N,N-Dimethylacetamid, N,N-Dimethylmethoxyacetamid, methylierte Amide der Kohlensäure oder Phosphorsäure wie z. B. N,N,N',N'-Tetramethylharnstoff, Methylphosphonsäure-bis-N,N-dimethylamid, insbesondere Hexamethylphosphorsäuretriamide und andere Phosphorverbindungen, wie Phoshor- oder Phosphonsäureester wie insbesondere Methylphosphonsäuredimethylester, sowie Alkanolamine wie z. B. Äythanolamin wie z. B. Äythanolamin.

Die im erfindungsgemäßen Verfahren verwendeten Farbstofflösungen können als weitere Zusätze oberflächenaktive Substanzen, weitere organische Lösungsmittel wie z. B. Benzylalkohol, oder Lösungsvermittler wie Caprolactam, Trimethyloläthan, Milchsäureamid oder Tetrahydroxymethylmethan (Pentaerythrit), sowie schaumdämpfende Hilfsmittel z. B. Siliconöle sowie Pilz- und/oder Bakterienwachstum hemmende Stoffe, ferner Säuren wie Essigsäure, Salzsäure, Phosphorsäure, Ameisensäure oder Basen wie NaOH, LiOH, Ammoniumhydroxid, Alkylamine z. B. Alkylamine mit 1 bis 6 Kohlenstoffatomen wie Äthylamin oder Methylamin enthalten.

Ferner können die Lösungen noch mit kleineren Mengen (ca. 1 bis 10 g/l) üblicher Zusatzstoffe wie Harnstoff, Dextrin oder Glucose versetzt werden.

Die oberflächenaktiven Substanzen (Tenside) können einzeln oder im Gemisch eingesetzt werden. Sie werden im allgemeinen in Mengen von 1 bis 35 Gewichtsprozent, bezogen auf das Farbstoff-Präparat verwendet.

Neben diesen oberflächenaktiven Substanzen können die weiteren Zusätze in Gesamtmengen von 1 bis 35 Gewichtsprozent, bezogen auf das Farbstoff-Präparat verwendet werden.

Als oberflächenaktive Substanzen kommen beispielsweise in Frage: Dispergatoren, Netz- oder Dispergiermittel anionischer, kationischer oder nichtionogener Natur, wie Natriumdioctylsulfosuccinat, Dibutylnaphthalinsulfonat, Dodecylbenzolsulfonat, Laurylpyridiniumchlorid, Alkylphenylpolyglykoläther, Stearyldiphenyl-oxäthyldiäthylentriamin und Äthylenoxid-Additionsprodukte.

Bevorzugte anionische Tenside sind Kondensationsprodukte aromischer Sulfonsäuren mit Formaldehyd wie Kondensationsprodukte aus Formaldehyd, Naphthalinsulfonsäure und Benzolsulfonsäure, oder ein Kondensationsprodukt aus Rohkresol, Formaldehyd und Naphthalinsulfonsäure, sowie vor allem Kondensationsprodukte aus Phenol-, Kresol- oder Naptholsulfonsäure und Formaldehyd oder Ligninsulfonate (Sulfit-Celluloseablauge) oder Oxyligninsulfonate, und insbesondere Kondensationsprodukte aus Naphthalinsulfonsäure und Formaldehyd, resp. ihre Alkyli- und/oder Ammoniumsalze.

Als oberflächenaktive Verbindungen können insbesondere auch Hilfsmittelmischungen eingesetzt werden wie z. B. Umsetzungsprodukte von 5 Mol Äthylenoxid und 1 Mol 2-Äthylhexanol oder das Umsetzungsprodukt von 8 Mol Äthylenoxid und 1 Mol o-Phenylphenol im Gemisch mit dem Umsetzungsprodukt aus Kokosfettsäure und 2 Mol Diäthanolamin, dem Umsetzungsprodukt aus Stearinsäure und 2 Mol Diäthanolamin oder dem Ammoniumsalz des sauren Schwefelsäureesters des Anlagerungsproduktes von 2 Mol Äthylenoxid und 1 Mol p-tert. Nonylphenol.

Solche Hilfsmittelmischungen sind aus der DE-OS 2 802 326 bekannt.

Die zum Spritzfärben verwendeten Farbstofflösungen weisen vorteilhafte die folgende Zusammensetzung auf:

- 10 bis 60 Gew.-%, insbesondere 15 bis 45 Gew.-% mindestens eines, eine Sulfonsäure- oder Carbonsäuregruppe enthaltenden Farbstoffes,
- 20 bis 80 Gew.-% mindestens eines mit Wasser mischbaren, organischen Lösungsmittels und gegebenenfalls
- 5 bis 50 Gew.-%, vorzugsweise 20 bis 30 Gew.-% Wasser und/oder
- 1 bis 40 Gew.-%, vorzugsweise 15 bis 35 Gew.-% weiteren Zusätze.

Die Prozentsätze sind jeweils auf das Gesamtgewicht der flüssigen Präparationen bezogen.

Bevorzugte wasserhaltige flüssige Präparationen enthalten:

- 15 bis 40 Gew.-% Farbstoff,
- 20 bis 65 Gew.-% organisches Lösungsmittel,
- 6 bis 35 Gew.-% Wasser, und gegebenenfalls
- 5 bis 35 Gew.-% weitere Zusätze.

Bevorzugte organische flüssige Präparationen enthalten:

- 15 bis 45 Gew.-% insbesondere 20 bis 45 Gew.-% Farbstoff,
- 50 bis 85 Gew.-% organisches Lösungsmittel und gegebenenfalls
- 10 bis 40 Gew.-% weitere Zusätze.

Diese organischen flüssigen Präparationen können zusätzlich geringe Mengen Wasser (Restfeuchte, bis höchstens ca. 5%) enthalten.

Die Farbstofflösungen sind gekennzeichnet durch einen Gehalt an anorganischem Inertsalz von höchstens 1 Gew.-%, insbesondere von höchstens 0,5 Gew.-% und vorzugsweise von höchstens 0,1 Gew.-%, bezogen auf das flüssige Präparat.

Die im erfindungsgemäßen Verfahren verwendete Farbstofflösung wird zweckmäßigerweise wie folgt hergestellt:

Eine wäßrige Lösung bzw. Suspension des wasserlöslichen Rohfarbstoffes wird zunächst über eine halbdurchlässige Membran geführt und z. B. im Zerstäubungstrockner oder anderen Trocknungsapparaturen wie Venuleth etc. getrocknet. Anschließend wird der trockene Farbstoff in beliebiger Reihenfolge mit einem mit Wasser mischbaren, organischen Lösungsmittel oder deren Mischungen, gegebenenfalls Wasser und/oder üblichen Einstellmitteln und weiteren Zusätzen vermischt. Vorzugsweise geht man so vor, daß man das Gemisch bei Raumtemperatur (15 bis 30° C) oder bei Temperaturen bis 130° C, vorzugsweise 40 bis 80° C, je nach Art des verwendeten Lösungsmittels verrührt und anschließend auf Raumtemperatur abkühlen läßt.

In einer weiteren Ausführungsform wird die wäßrige Lösung bzw. Suspension des wasserlöslichen Rohfarbstoffes nach der Führung über die halbdurchlässige Membran gleich anschließend, ohne Zwischentrocknung, mit dem organischen Lösungsmittel und gegebenenfalls weiteren Zusätzen vermischt. Die wäßrige Ausgangslösung bzw. -suspension kann gegebenenfalls auch organisches Lösungsmittel und/oder andere, für die Herstellung der flüssigen Präparationen erwünschten Zusätze enthalten.

Als wäßrige Ausgangslösung bzw. -suspension kann man die direkt aus der Synthese erhaltene Lösung bzw. Suspension oder eine wäßrige Anschlämmung des feuchten Preß- oder Filterkuchens der Rohfarbstoffe mit unterschiedlichem Gehalt an unerwünschten gelösten Stoffen mit niedrigem Molekukargewicht, besonders von bei der Synthese des Farbstoffes anfallenden Nebenprodukten und gelösten anorganischen und organischen Salzen verwenden. In Fällen, da z. B. das Kupplungs- bzw. Kondensationsprodukt nicht oder nur äußerst mühsam abtrennbar ist, kann auch direkt die rohe Kupplungs-, Kondensations- bzw. Neutralisationslösung verwendet werden. Vorteilhaft verwendet man Ausgangslösungen bzw. -suspensionen, die 2 bis 50% Farbstoff enthalten.

Bei manchen Farbstoffen, vor allem Metallkomplexfarbstoffen ist es vorteilhaft, den aus der Syntheselösung bzw. als Preßkuchen erhaltenen Rohfarbstoff nach bekannten Methoden, z. B. in einer Sand- oder Mikrosolmühle naß zu mahlen.

Man kann aber auch von dem trockenen Rohfarbstoffpulver ausgehen, wenn man es zunächst mit Wasser anschlämmt.

Gewünschtenfalls kann man die Synthesemischung mit Wasser oder organischen Lösungsmitteln verdünnen und/oder auch mit weiteren, für die Herstellung der flüssigen Präparationen erwünschten Zusätzen, z. B. oberflächenaktiven Substanzen versetzen. Auf diese Weise werden die Zusätze, vor allem die oberflächenaktiven Substanzen, in einem Arbeitsgang ebenfalls entsalzt und konzentriert. Selbstverständlich gibt man nur solche Zusätze zu, welche von der Membran ebenfalls zurückgehalten werden und zudem die Membran nicht beeinträchtigen. Das Gemisch wird zur Abtrennung von Synthesenebenprodukten mit Molekulargewichten, die unterhalb des »cut off level« der verwendeten Membran liegen, über eine halbdurchlässige Membran geführt. Gleichzeitig wird auf einen Gehalt an Farbstoff von mindestens 10 und vorteilhaft 20 bis 60% aufkonzentriert.

Das Hyperfiltrationsverfahren ermöglicht nicht nur die Herstellung von flüssigen Farbstoff-Präparationen mit verbesserten Eigenschaften, sondern bietet technische Vorteile gegenüber den herkömmlichen Verfahren, weil man einige Verfahrensschritte, z. B. langwierige Filtrationsstufen oder Zentrifugieren eliminieren bzw. beschleunigen kann, was u. a. zur Ersparnis an Zeit und Energie führt.

Die zur Herstellung der Farbstofflösung verwendeten Membranen sollen höhermolekulare Stoffe zurückhalten, während sie einen hohen Durchfluß von Wasser und gelösten Stoffen mit einem niedrigen Molekulargewicht, z. B. Salzen, wie Natriumchlorid, Natriumsulfat, Kaliumchlorid, Ammoniumsulfat, Natriumphoshat, Kaliumsulfat, Natriumacetat oder niedrigmolekularen Verunreinigungen, z. B. nicht umgesetzte oder teilweise zersetzte Ausgangsprodukte, gewährleisten.

Sie sollen aber auch verschieden geladene Ionen trennen können.

Der Rückhalt bzw. die Abtrennung (»cut off level«) wird durch das Molekulargewicht bzw. die ionische Beladung bestimmt. Diese sogenannte Membran-Hyperfiltration wird auch Umkehr-Osmose (Reverse Osmosis) genannt und ist mit der Ultrafiltration verwandt. Unter diesem Begriff werden Abtrennungsvorgänge im molekularen Bereich verstanden.

Bei den Membranen handelt es sich um halbdurchlässige, geladene, asymmetrische Membranen, deren Poren einen Durchmesser von 0,1 bis 50 nm aufweisen. Sie bestehen aus organischem Material, das ionische Gruppen enthält. Die Membranen weisen einen »cut off level« von 300 bis 500 auf, insbesondere einen »cut off level« von 400 bis 500. Sie lassen Wasser, gegebenenfalls vermischt mit organischen Lösungsmitteln und aufgelöste Stoffe, die auf Grund ihrer Molekulargrößen unterhalb des Abtrenn-Niveaus (»cut off level«) liegen, bei hohen Geschwindigkeiten pro Flächeneinheit und bei geringem bis mittlerem Druck durchtreten. Erfindungsgemäß werden Drucke von 10 bis 100 bar, vorzugsweise von 10 bis 30 bar und insbesondere von 20 bis 30 bar verwendet. Der Druck kann z. B. mittels einer Pumpe ausgeübt werden.

In einem Filtrationsgang kann der Entsalzungseffekt ohne Farbstoffverlust bis zu 70 und mehr Prozent betragen. Dabei nimmt das Volumen der Lösung der zurückgehaltenen Substanzen (konzentratseitig) entsprechend ab und die Konzentration des zurückgehaltenen Teils zu. Wird eine weitere Verminderung der niedermolekularen Komponente gewünscht, so kann dies ohne Schwierigkeiten nach Verdünnung der zurückgehaltenen Lösung oder Suspension mit Wasser zweckmäßig auf das Ausgangsvolumen durch ein- oder mehrmalige Wiederholung des Verfahrens erreicht werden. Die Trennung kann auch kontinuierlich durchgeführt werden, indem die Zufuhrgeschwindigkeit des Wassers derjenigen der Permeatabnahme angepaßt wird. Diskontinuierlich und kontinuierlich können auf diese einfache Art und Weise bei Zimmertemperatur Entsalzungs- und Reinigungseffekte von bis zu 95% oder gewünschtenfalls gar bis 99%, und mehr, d. h. bis das Permeat frei von unerwünschten Stoffen ist, erreicht werden.

Die Membranen bestehen im wesentlichen aus einem polymeren Stoff, der mindestens an der Oberfläche durch Reste mit ionisierbaren Gruppen modifiziert ist.

Es können in dieser Weise modifizierte natürliche, halbsynthetische oder synthetische Materialien zu Membranen verarbeitet werden. Ein derart zu modifizierender polymerer Stoff enthält als reaktionsfähige Gruppen beipielsweise Hydroxyl- und/oder Aminogruppen. Er kann dann mit geeigneten Reagenzien umgesetzt werden, die einerseits ionisierbare Gruppen und andererseits mindestens eine unter Bildung einer kovalenten Bindung reaktionsfähige Gruppierung enthalten.

Beispielsweise können folgende polymere Verbindungen in der angegebenen Weise modifiziert werden:

- Polymerelektrolyte,
- Polyvinylalkohole,
- Celluloseäther oder -ester wie Cellulosenitrat oder -propionat,
- vorzugsweise Celluloseacetate, z. B. solche mit niedrigem Acetylgruppengehalt aber auch höher acylierte Cellulose, z. B. sog. Zweieinhalbacetat, oder
- Polyacrylnitril und Copolymere aus Acrylnitril und anderen äthylenisch ungesättigten Monomeren.

Als reaktive Reagenzien, die eine ionisierbare Gruppe enthalten, kommen farblose und farbige Verbindungen in Betracht, z. B. ionogene Reaktivfarbstoffe, die verschiedenen Klassen angehören können, wie Anthrachinon-, Azo- oder Formazanfarbstoffe. Als Reaktivgruppen, welche die Bindung dieser Reagenzien an die Ausgangspolymeren ermöglichen, seien die folgenden genannt:

- Carbonsäurehalogenidgruppen,
- Sulfonsäurehalogenidgruppen,
- Reste $\alpha,\beta$-ungesättigter Carbonsäuren, z. B. der Acrylsäuren, Methacrylsäure, $\alpha$-Chloracrylsäure, $\alpha$-Bromacrylsäure,
- Reste vorzugsweise niedriger Halogenalkylcarbonsäuren, z. B. der Chloressigsäure, $\alpha,\beta$-Dichlorpropionsäure, $\alpha,\beta$-Dibrompropionsäure,
- Reste von Fluorcyclobutancarbonsäuren, z. B. der Tri- oder Tetrafluorcyclobutancarbonsäure,
- Reste mit Vinylacylgruppen, z. B. Vinylsulfongruppen oder Carboxyvinylgruppen,
- halogenierte Pyrimidin- oder 1,3,5-Triazinreste.

Als ionisierbare Gruppen sind z. B. Sulfatogruppen, Sulfonsäuregruppen, Sulfonsäureamidgruppen, Carbonsäuregruppen, Carbonsäureamidgruppen, Hydroxyl-, Thiol-, Isocyanat- und/oder Thioisocyanatgruppen, von primären, sekundären oder tertiären Amiogruppen und Wasserstoff gebildete Ammoniumgruppen oder quaternäre Ammoniumgruppen, ferner Phosphonium- oder Sulfoniumgruppen geeignet. Besonders günstige Ergebnisse werden in manchen Fällen mit sulfonsäuregruppenhaltigen Verbingungen erzielt. Besonders wertvoll und vielseitig anwendbar sind die Polymermembranen, die durch einen sulfonsäuregruppenhaltigen Azofarbstoff modifiziert sind. Der Azofarbstoff kann auch komplex gebundenes Metall, beispielsweise Kupfer enthalten.

Membranen aus (teilweise acetyliertem) Celluloseacetat können z. B. durch Umsetzung mit den zuvor genannten reaktiven chemischen Verbindungen, insbesondere Reaktivfarbstoffen modifiziert werden (GB-PS 1 504 261).

Eine weitere Modifikation von Celluloseacetat kann z. B. durch folgende chemische Umsetzungen (in der angegebenen Reihenfolge) erfolgen: polyfunktionelle monomere Verbindung mit mindestens zwei funktionellen Gruppen (z. B. Cyanurchlorid), polyfunktionelles Polymer (z. B. Polyäthylenimin), ionische Verbindung (z. B. ionische Reaktivfarbstoffe, Reaktivgruppierungen und ionische Gruppen wie angegeben) (EP-OS 26 399).

In analoger Weise kann man auch Polyvinylalkohol enthaltende Membranen modifizieren.

Die polyfunktionelle monomere Verbindung weist vorzugsweise mindestens 2 funktionelle Gruppen auf. Besonders geeignet sind Halogendi- oder -triazine, wie z. B. Cyanurhalogenide (Cyanurchlorid), oder Tri- oder Tetrahalogenpyrimidine (Tetrachlorpyrimidin).

Die polyfunktionellen Polymere weisen vor allem aliphatische oder aromatische Aminogruppen, Hydroxyl-, Thiol-, Isocyanat- und/oder Thioisocyanatgruppen auf. Geeignete polyfunktionelle Polymere sind Polyethylenimin, Polyvinylalkohol, Cellulosederivat oder Polyvinylanilin; Polyäthylenimin ist bevorzugt.

Die Membran enthält als ionische Gruppe vorzugsweise Sulfonsäure-, Carbonsäure- oder Ammoniumgruppen.

Besonders vorteilhaft sind die Membranen, die Reste eines Reaktivfarbstoffes als Reste mit ionogenen Gruppen enthalten.

Es können aber auch Membranen verwendet werden, die aus einem Grundgerüst bestehen, das Polyacrylnitril oder Copolymerisat aus Acrylnitril und anderen äthylenisch ungesättigten Monomeren enthält (GB-OS 2 058 798).

Durch Umsetzung mit Hydroxylamin führt man Amidoximgruppen in die Membran ein und modifiziert diese dann wie für die Celluloseacetatmembranen angegeben.

Der Anteil der Acrylnitrileinheiten im Grundgerüst der Membran beträgt vorteilhaft mindestens 5 und vorzugsweise mindestens 20 Gewichtsprozent.

Bevorzugt sind Copolymere von Acrylnitril und Vinylacetat, Vinyläthern, Vinylpyridin, Vinylchlorid, Styrol, Butadien, (Meth)-acrylsäure, Maleinsäureanhydrid, 2-Aminomethylmethacrylat oder Allylverbindungen oder Ter- oder Tetrapolymeren auf Acrylnitrilbasis.

Die so modifizierten Membranen können noch einer Wärmebehandlung unterworfen werden (»Tempern«). Durch die Wärmebehandlung wird weitgehend die Porengröße der Membranhaut bestimmt. Man behandelt beipeilsweise die Membran während 1 bis 30 Minuten bei einer Temperatur von 60 bis 90°C, zweckmäßig indem man sie in warmes Wasser taucht. Gegebenenfalls kann die Wärmebehandlung auch vor der Umsetzung mit der reaktiven, ionisierbare Gruppen enthaltenden

Verbindung ausgeführt werden. Ferner läßt sich die Umsetzung auch ausführen, bevor das polymere Material zur asymmetrischen Membran verarbeitet wird.

Die Membranen können verschiedene Formen aufweisen, z. B. plattenförmig, blattförmig, röhrenförmig, in Form einer Tasche, eines Konus oder von Hohlfasern vorliegen. Bei starker Druckbelastung können die Membranen natürlich durch Drahtsiebe oder Lochplatten gestützt werden. Innerhalb des weiter oben angegebenen Bereiches kann die Porengröße durch abgestuftes Tempern variiert und ebenfalls dem jeweiligen Verwendungszweck angepaßt werden. Zweckmäßig beträgt die durchschnittliche Ladungsdichte (gleich Gehalt an ionisierbaren Gruppen) der Membran 1 bis 100 Milliäquivalente je kg trockene Membran.

Bei den im erfindungsgemäßen Verfahren verwendeten Farbstofflösungen handelt es sich in der Regel um echte oder kolloidale Lösungen. Sie sind dünnflüssig (Viskosität von etwa 5 bis 400 cP/20° C) und gut lagerstabil, d. h. sie bleiben mindestens mehrere Monate bei Temperaturen von —20 bis +60° C, insbesondere —10 bis +40° C in gebrauchsfähigem Zustand. Diese Präparationen können bei der Herstellung von Spritzlösungen sowohl mit Wasser als auch mit organischen Lösungsmitteln und/oder Verdickungsmitteln versetzt werden, ohne daß der Farbstoff ausfällt oder daß es zu anderen Inhomogenitäten kommt. Mit dem genannten Spritzlösungen kann man Leder in bekannter Weise färben.

Die Farbstofflösungen sind sowohl mit Wasser (z. B. 1 Teil konzentrierte Farbstoffzubereitung in 4 bis 9 Teilen Wasser) als auch mit organischen Lösungsmitteln, z. B. verätherten Glykolen oder Nitrolakken (z. B. bestehend aus 15% Nitrocellulose, 10% Kunstharz, 5% Weichmacher, 20% niedrig-siedende Lösungsmittel (Methanol, Aceton), 45% Lösungsmittel mit mittleren Siedepunkten (Benzol), 5% hochsiedende Lösungsmittel (Glykole) (Römpp's Chemie Lexikon, 7. Aufl. 1974) mischbar, ohne daß eine Änderung des Verteilungszustandes des Farbstoffes eintritt. Diese Spritzlösungen bleiben wie angegeben einige Wochen, insbesondere aber während eines Zeitraumes von etwa 3 bis 14 Tagen stabil, zeigen also z. B. keinerlei Ausfällung, Kristallisation oder Agglomeration des Farbstoffes. Diese Lösungen bilden während dieser Zeit auch keine Mehrphasensysteme. Die Homogenität solcher Mischungen bleibt während der genannten Zeitspanne voll erhalten. Eine Ausfällung des Farbstoffes in der Mischung würde sich in der Applikation (z. B. Spritzapplikation) sehr störend auswirken, wie beispielsweise Verstopfung der Spritzdüsen oder sich im Broncieren des Farbstoffes auf der Oberfläche des Leders bemerkbar machen.

Das Hyperfiltrationsverfahren bietet u. a. folgende Vorteile im Vergleich zu den bisher üblichen Verfahren zur Herstellung von flüssigen Farbstoffpräparationen:

— höhere Farbstoffkonzentration der erhaltenen Präparationen
— verbesserte Lagerstabilität, erhöhte Applikationsstabilität
— technisch einfachere Aufarbeitung der flüssigen Handelsform
— Ausbeutegewinn (erhöhte Farbstärke)
— kostengünstige Herstellung.

In den nachfolgenden Beispielen, welche die Erfindung erläutern, bedeuten Teile, falls nichts anderes angegeben, Gewichtsteile und Prozente Gewichtsprozente. Gewichtsteile und Volumteile stehen im gleichen Verhältnis zueinander wie g zu ml. Die Temperaturen sind in Grad Celsius angegeben. Die Farbstoffe liegen vorzugsweise als Alkalisalz, vor allem als Natriumsalz vor.

Beispiel A

Herstellung der Membranen

Die bevorzugten, erfindungsgemäß verwendbaren Membranen können beispielsweise wie folgt hergestellt werden:

Aus 25 g Celluloseacetat (EASTMAN KODAK, Typ 398/10, Acetylierungsgrad = 39,8%), 45 g Aceton und 30 g Formamid wird eine Lösung hergestellt. Man läßt sie drei Tage stehen, gießt sie auf eine Glasplatte und verstreicht sie mit einem Spatel zu einer Schicht von 0,6 mm Dicke, läßt während 5 Sekunden bei 25° C Lösungsmittel verdunsten, legt die Glasplatte für 2 Stunden in Eiswasser ein und zieht die entstandene Membran von der Glasplatte ab.

Die Membran wird dann in eine 5%ige wäßrige Lösung der 1 : 2-Chromkomplexverbindung des Farbstoffes der Formel

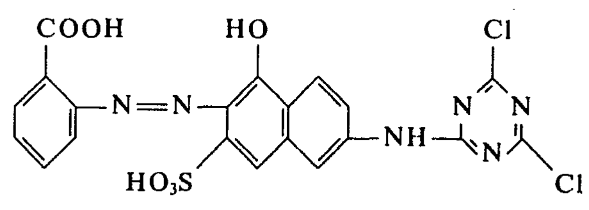

eingetaucht und verbleibt dort während 48 Stunden bei pH-Wert 6 und 25° C. Hierauf wird der pH-Wert der Farbstofflösung durch Zusatz von Natriumhydroxyd auf 10,4 gebracht und die Lösung während 40 Minuten bei 25° C ständig bewegt.

Anstatt die Membran so in zwei Stufen mit der Farbstofflösung zu behandeln, kann man sie auch einstufig während $2^1/_2$ Stunden beim pH-Wert 10,5 und bei 25° C mit einer 10%igen Lösung des Chromkomplexfarbstoffes behandeln. Zur anschließenden Wärmebehandlung (Tempern) wird die Membran während 10 Minuten in Wasser von 60° C eingelegt.

Beispiel 1

a) Der trockene Rohfarbstoff der Formel

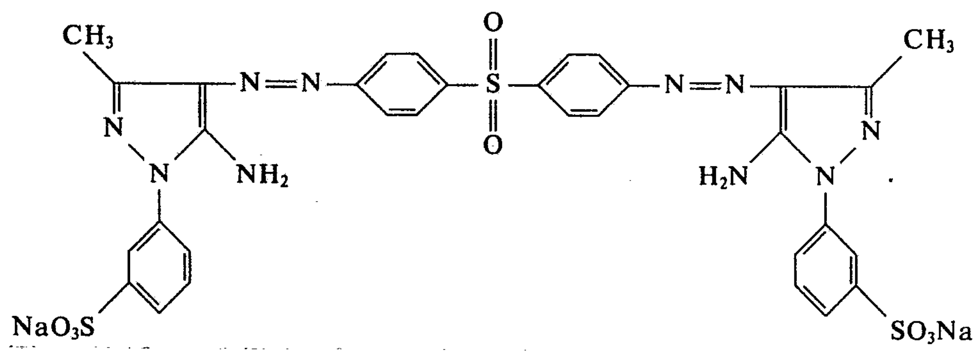

enthaltend ca. 19,7% NaCl, berechnet auf den Rohfarbstoff, wird in soviel Wasser gelöst, daß der Feststoffgehalt der Lösung ca. 10% beträgt und in einer Anlage für Umkehr-Osmose à 0,4 $m^2$ Membranfläche (Celluloseacetat-Membran [40%Acetylierungsgrad], modifiziert mit einem sauren halogentriazinhaltigen Reaktiv-Farbstoff gemäß der (GB-PS 1 504 261) unter Anwendung von 10—30 bar Überdruck während 10 Stunden entsalzt und aufkonzentriert. Die resultierende dickflüssige Suspension von ca. 24% Trockengehalt wird im Venuleth-Trockner bei 90—100° getrocknet. Der erhaltene Farbstoff ist praktisch salzfrei.

Anstelle des trockenen Rohfarbstoffes kann man auch von dem Filterpreßkuchen des Farbstoffes ausgehen. Man erhält ebenfalls den praktisch salzfreien Farbstoff.

Wenn man anstelle der oben angegebenen Membran eine Membran gemäß der GB-OS 2 058 798 oder der europäischen Anmeldung Nr. 0 026 399 verwendet, erhält man ähnlich gute Resultate.

b) 22,0 Teile des so erhaltenen Farbstoffes (enthaltend weniger als 0,1% NaCl) werden unter Rühren bei 50—60° innerhalb 5 Minuten in ein Lösungsmittelgemisch, bestehend aus 23,4 Teilen Wasser, 15,6 Teilen $\gamma$-Butyrolacton und 23,4 Teilen Äthylenglykol und enthaltend 7,8 Teilen des Anlagerungsproduktes von 8 Mol Äthylenoxid an 2-Hydroxydiphenyl, 7,8 Teilen des Kondensationsproduktes aus Kokosfettsäure mit 2 Mol Diäthanolamin (enthaltend ca. 2% emulgiertes Siliconöl als Antischaummittel und ca. 2,2% Essigsäure), eingetragen.

Das Gemisch wird dann 2 Stunden bei 50—60° gerührt. Nach Ausschalten der Heizung rührt man das Gemisch weitere 3 Stunden nach. Die entstandene Lösung enthält keine ungelösten Anteile. Man erhält 98,5 Teile einer sehr dünnflüssigen (ca. 18 cP ($18.10^{-3}$ Pa · s)bei 20°), klaren Farbstofflösung, welche sich im Lagertest (Lagerung für 9 Monate bei Temperaturen von —10° bis +40°) als sehr stabil erweist.

Die so erhaltene Farbstofflösung ist auch mehrere Tage in Mischungen mit Wasser, organischen Lösungsmitteln, sowie Wasser/Lösungsmittelgemischen, wie sie in den Spritzlösungen für die Lederapplikation verwendet werden, sehr stabil; der Farbstoff fällt nicht aus. Geprüft wurden folgende Mischungen:

($\alpha$) 1 Teil Farbstofflösung und 4 bis 9 Teile Wasser
($\beta$) 1 Teil Farbstofflösung, 2 Teile Äthylenglykolmonoäthyläther und 2 Teile Wasser,
($\gamma$) 1 Teil Farbstofflösung, 1 Teil Äthylenglykolmonoäthyläther und 8 Teile Wasser,
($\delta$) 5 Teile Farbstofflösung und 95 Teile Nitrolack,
($\varepsilon$) 5 Teile Farbstofflösung, 20 Teile Wasser und 75 Teile Nitroemulsion.

In keiner dieser Mischungen fiel der Farbstoff aus. Diese Mischungen sind z. B. zum Färben von Leder geeignet.

c) Vergleichsbeispiel

22,0 Teile des unter a) angegebenen trockenen Rohfarbstoffes (enthaltend ca. 19,7% NaCl) werden ohne Reinigung durch »Umkehr-Osmose« in ein Lösungsmittelgemisch der gleichen Zusammensetzung wie unter b) angegeben eingetragen und weiterverarbeitet.

Zur Entfernung von vorhandenen ungelösten Verunreinigungen wird durch ein Stahlsieb DIN 130 (= ca. 40 µm Maschenweite) gesiebt.

Es kann auch zentrifugiert werden.

Man erhält 97,5 Teile (= 97,5% des Einsatzes) einer dünnflüssigen, homogenen Lösung, welche eine Farbstärke ca. 20% weniger als diejenige der unter b) erhaltenen Lösung aufweist.

Diese Lösung zeigte sich im Lagertest als weniger stabil als die unter b) erhaltene Lösung. Nach Animpfen mit Farbstoffkristallen hat sich nach etwa 10 Monaten Lagerdauer eine Kristallinsel mit einem Durchmesser von ca. 8 mm gebildet. (Die Impfkristallinsel hatte ursprünglich einen Durchmesser von 3 mm).

Beispiel 2

a) 15,0 Teile des gemäß Beispiel 1a) erhaltenen, durch Umkehr-Osmose gereinigten, praktisch salzfreien Farbstoffes werden wie im Beispiel 1b) angegeben in folgendes Lösungsmittelgemisch eingetragen und weiterverarbeitet:

| | |
|---|---|
| 4,25 Teile | Anlagerungsprodukt von 8 Mol Äthylenoxid an 2-Hydroxydiphenyl, |
| 4,25 Teile | Kondensationsprodukt aus Kokosfettsäure mit 2 Mol Diäthanolamin (enthaltend ca. 2% emulgiertes Siliconöl und 2,2% Essigsäure), |
| 25,5 Teile | Butyrolacton, |
| 25,5 Teile | Diäthylenglykol |
| 25,5 Teile | Wasser. |

Die entstandene Lösung enthält keine ungelösten Anteile und erweist sich im Lagertest (1 Jahr) als sehr stabil. Auch nach 4maligem Animpfen der Lösung mit Farbstoffkristallen war keine Kristallisation zu beobachten. Die Impfkristalle verschwanden jeweils nach kurzer Zeit.

b) Vergleichsbeispiel

18,0 Teile des gemäß Beispiel 1c) verwendeten, salzhaltigen Farbstoffes werden wie im Beispiel 1c) angegeben in folgendes Lösungsmittelgemisch eingetragen und weiterverarbeitet:

| | |
|---|---|
| 4,1 Teile | Anlagerungsprodukte von 8 Mol Äthylenoxid an 2-Hydroxydiphenyl, |
| 4,1 Teile | Kondensationsprodukt aus Kokosfettsäure mit 2 Mol Diäthanolamin (enthaltend ca. 2% emulgiertes Siliconöl und 2,2% Essigsäure), |
| 24,6 Teile | Butyrolacton, |
| 24,6 Teile | Diäthylenglykol, |
| 24,6 Teile | Wasser. |

Die entstandene Lösung weist die gleiche Farbstärke wie die unter Beispiel 2a) erhaltene Lösung auf. Die Lösung war jedoch im Lagertest weniger stabil als die unter Verwendung des durch Umkehr-Osmose gereinigten Farbstoffes erhaltenen Lösung. Während der Testdauer (1 Jahr) wurde einmal mit Farbstoffkristallen geimpft. Die Impfkristalle blieben ungelöst, es wurde sogar leichtes Kristallwachstum beobachtet.

Beispiel 3

a) 20 Teile des unter Beispiel 1a) erhaltenen, entsalzten Farbstoffs werden unter Rühren bei 50 bis 60° C innerhalb von 5 Minuten in das folgende Hilfsmittel/Lösungsmittelgemisch eingetragen:

| | |
|---|---|
| 4 Teile | des Umsetzungsproduktes von 8 Mol Äthylenoxid und 1 Mol o-Phenylphenol |
| 4 Teile | des Umsetzungsproduktes aus Kokosfettsäure und 2 Mol Diäthanolamin (enthaltend etwa 2% emulgiertes Siliconöl als Antischaummittel und etwa 2,2% Essigsäure) |
| 24 Teile | Diäthylenglykol |
| 24 Teile | Butyrolacton |
| 24 Teile | Wasser |

Nach zweistündigem Rühren bei 50 bis 60°C wird noch weitere 3 Stunden bei Raumtemperatur gerührt.

Die entstandene Lösung enthält keine ungelösten Anteile.

Die Farbstofflösung ist auch nach 9 Monaten Lagerung bei Raumtemperatur noch stabil. Sogar durch die Zugabe von Farbstoffimpfkristallen kommt es in der Farbstofflösung nicht zu Ausfällungen.

b) Ersetzt man das Diäthylenglykol durch die gleiche Menge Äthylenglykol, so erhält man ebenfalls eine Farbstofflösung mit sehr guter Lagerstabilität.

Beispiel 4

860 Teile des unter Beispiel 1a) erhaltenen Farbstoffs (Salzgehalt weniger als 0,1%) werden innerhalb von 15 Minuten in ein Gemisch aus 244 Teilen des Umsetzungsprodukts von 8 Mol Äthylenoxid und 1 Mol o-Phenylphenol, 244 Teilen des Umsetzungsprodukts aus Kokosfettsäure und 2 Mol Diäthanolamin, 1462 Teilen Butyrolacton, 1462 Teilen Diäthylenglykol und 1462 Teilen Wasser von 50 bis 60°C eingetragen, während 2 Stunden bei dieser Temperatur gerührt und dann noch weitere 6 Stunden bei Raumtemperatur gerührt. Anschließend entfernt man einen geringen Anteil unlöslicher Verunreinigungen. Man erhält 5633 Teile einer sehr lagerstabilen, klaren, homogenen Farbstofflösung mit einer Dichte von 1,14 g/cm$^3$ (20°C) und einer Viskosität von 20 cP/20°C.

Beispiel 5

a) 95 Teile einer Paste, enthaltend 14,6 Teile des 1 : 1-Chromkomplexes des Farbstoffs der Formel

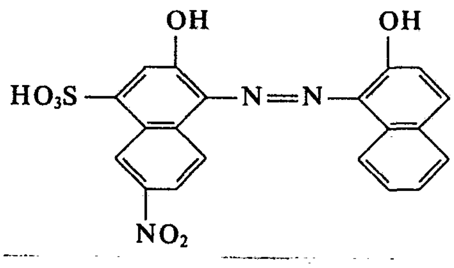

werden in 20 Teile Wasser eingetragen. Dann werden 47 Teile einer Paste, enthaltend 7,3 Teile des 1 : 2-Chromkomplexes desselben Farbstoffs eingetragen und das Gemisch 2 Stunden bei Raumtemperatur gerührt.

0,5 Teile Oxalsäure werden dann zugegeben und das Reaktionsgemisch auf 95° erhitzt. Innerhalb 15 Minuten wird dann mit ca. 7 Vol.-Teilen einer wäßrigen Natriumhydroxidlösung (10 N) neutralisiert. Dann wird eine halbe Stunde bei konstantem pH (6,8—7,2) gerührt.

Anschließend gibt man 2,25 Teile Oxalsäure hinzu. Die entstandene Lösung (pH 3,8—4,0), wird mit ca. 0,3 Vol.-Teilen einer wäßrigen Natriumhydroxidlösung (10 N) auf pH 4,5—5,0 gestellt und während einer Stunde gekocht. Man läßt das Gemisch auf Raumtemperatur abkühlen und gibt unter Rühren 3,75 Teile des Anlagerungsproduktes aus Octadecylalkohol und 35 Mol Äthylenoxid zu.

b) Das unter a) erhaltene Synthesegemisch, enthaltend ca. 14,5%—17,5% Feststoff wird wie im Beispiel 1a) durch Umkehr-Osmose entsalzt und aufkonzentriert. Die resultierende dickflüssige Suspension, enthaltend mehr als 25% Feststoff, wird im Vakuumschrank getrocknet.

c) 52,6 Teile des unter b) erhaltenen Feststoffes (enthaltend weniger als 2% NaCl) werden unter Rühren bei 50—60° in ein Lösungsmittelgemisch, bestehend aus 59 Teilen Äthylenglykolmonoäthyläther und 88,4 Teilen Diäthylenglykol eingetragen. Das Gemisch wird 2 Stunden bei 50—60° gerührt. Nach Ausschalten der Heizung rührt man das Gemisch weitere 3 Stunden nach. Die entstandene Lösung enthält praktisch keine ungelösten Anteile. Die erhaltene, sehr dünnflüssige klare Farbstofflösung erweist sich im Lagertest als stabil.

Beispiel 6

a) Der trockene Rohfarbstoff der Formel

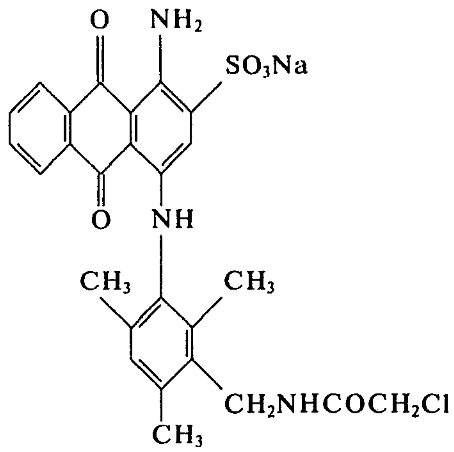

enthaltend ca. 27,7% Natriumsulfat und ca. 0,7% Natriumchlorid wird in soviel Wasser gelöst, daß der Feststoffgehalt der Lösung ca. 7% beträgt. Diese Lösung wird wie im Beispiel 1a) beschrieben der Umkehr-Osmose unterworfen.

Das resultierende Konzentrat enthält ca. 21% Trockensubstanz. Es wurde mittels Zerstäubungstrocknung (Lufteingangstemperatur 160° C, Luftausgangstemperatur ca. 80—85° C) getrocknet.

Der auf diese Weise entsalzte Farbstoff enhielt kein Sulfat mehr und nur noch eine Spur Natriumchlorid (0,2%), seine Farbstärke ist um rund 37% gestiegen und die Nuance veränderte sich durch die Umkehr-Osmose-Behandlung nicht.

Anstelle von trockenem Rohfarbstoff kann man auch von feuchten Preßkuchen ausgehen. Man erhält ebenfalls den praktisch salzfreien Farbstoff.

b) Man kann aber auch die »Syntheselösung« des Farbstoffes, d. h. den Slurry direkt aus der Synthese ohne Zugaben von Salzen etc. zwecks Abscheidung des Farbstoffes aus der Lösung, mit einem Feststoffgehalt von ca. 21% (Suspension, Farbstoff teilweise ausgefallen) durch Umkehr-Osmose entsalzen, indem die »Syntheselösung« auf ca. 10—11% Feststoffgehalt verdünnt wurde. Durch dieses Prozedere veränderten sich die Eigenschaften des Farbstoffes wie folgt:

| | Farbstoff vor Umkehr-Osmose | Farbstoff nach Umkehr-Osmose |
|---|---|---|
| Natriumchlorid | 0,3% | 0,3% |
| Natriumsulfat | 68,6% | 6,4% |
| Nebenprodukte (MG < 500) | — | (ca. 3% entfernt worden) |
| Farbstärke (spektrophotometrisch) | 97% | 321% (entsprechend einer Erhöhung von 230%) |
| Nuance | | unverändert |

c) 88 Teile des nach Beispiel 6a) voll entsalzten und dann getrockneten Farbstoffes wurden in ein Lösungsmittelgemisch, bestehend aus 22,4 Teilen Äthylenglykol-mono-äthyläther, 22,4 Teilen Tetramethylharnstoff und 67,2 Teilen Diäthylenglykol bei 50—60° C unter Rühren innerhalb von 20 Minuten eingetragen.

Das Gemisch wurde unter ständigem Rühren $4^1/_2$ Stunden bei 50—60° C gehalten und dann nach Ausschalten der Heizung (Senken des Heizbades) noch 2 Stunden weitergerührt.

Zum Abtrennen von allfällig vorhandenen unlöslichen Anteilen wurde das dickflüssige Gemisch durch ein Sieb mit einer Maschenweite von ca. 40 µm (= DIN 130) gesaugt, wobei jedoch keinerlei Rückstand abgetrennt werden konnte.

Man erhielt 188,9 Teile Farbstofflösung, entsprechend 94,45% des Einsatzes.

Nach 2 Monaten Lagerung bei Raumtemperatur war keinerlei Veränderung der Struktur der Lösung zu beobachten, d. h. kein Kristallwachstum.

d) Werden gemäß Vorschrift nach Beispiel 6c) 88 Teile des gleichen Farbstoffes in ein Lösungsmittelgemisch, bestehend aus 44,8 Teilen Tetramethylharnstoff und 67,2 Teilen Diäthylenglykol eingetragen, so erhält man 187,6 Teile einer Lösung mit ähnlichen Eigenschaften, entsprechend einer Ausbeute von 93,8% des Einsatzes.

Nach 8 Monaten Lagerung bei Raumtemperatur zeigte sich in der Lösung kein Kristallwachstum, sie war nach wie vor einwandfrei.

e) Vergleichsbeispiel

80 Teile des trockenen, nicht entsalzten Rohfarbstoffes der unter Beispiel 6a) angegebenen Formel, enthaltend 27,7% Natriumsulfat und ca. 0,7% Natriumchlorid, wurden in ein Lösungsmittelgemisch, bestehend aus 24 Teilen Äthylenglykol-mono-äthyläther, 24 Teilen Tetramethylharnstoff und 72 Teilen Diäthylenglykol unter Rühren bei 50—60° C eingetragen, während zwei Stunden bei dieser Temperatur gehalten, dann die Heizung entfernt und weitere 4 Stunden gerührt.

Durch Zentrifugieren konnten 30,5 Teile (=15,25%) unlösliche Substanzen (vorwiegend Salze) mit Lösung getränkt abgetrennt werden. Man erhielt 164,3 Teile (=82,15% des Einsatzes) einer ziemlich dünnflüssigen Lösung, welche nach 6monatiger Lagerung bei Raumtemperatur bereits Ansätze von Kristallwachstum zeigte: Unter dem Mikroskop sind unzählige Nadeln von ca. 16—30 µm Länge sichtbar. Am Boden des Gefäßes sammelte sich zähes, weiches, schlecht aufrührbares Sediment. Die Nadeln bestanden aus Farbstoff. Nach 4 Monaten Lagerung war in der Lösung nur eine Spur Sediment (praktisch ausschließlich aus Salzteilchen bestehend) vorhanden.

Obwohl hier 34% weniger Farbstoff in der Lösung vorhanden ist als in den Beipielen 6c) und 6d), fällt der Farbstoff nach einiger Zeit in Form von Nadeln aus der Lösung aus, während die salzfreien Formulierungen stabil bleiben.

Beispiel 7

a) Die Syntheselösung des Farbstoffes der im Beispiel 1 angegebenen Formel (welche frei ist von zur Abscheidung des Farbstoffes dienenden Salzzugaben), enthaltend 10,7% Feststoffe (Farbstoff, Salze, Nebenprodukte) wird wie im Beipiel 1a) beschrieben der Umkehr-Osmose unterworfen. Die dadurch erhaltene Lösung enthält 16,8% Feststoffe. Diese entsalzte Syntheselösung wird der Zerstäubungstrocknung unterworfen. Man erhält so ein Farbstoff-Pulver von 94,9% Trockengehalt.

b) Als Vergleich wird feuchter Rohfarbstoff-Preßkuchen aus derselben Synthesepartie (also aus der Syntheselösung abgeschiedener Farbstoff) in Wasser angeschlämmt (auf einen Feststoffgehalt von 9—10%) und der Umkehr-Osmose unterworfen: Endfeststoffgehalt 16,7%. Die entsalzte Lösung wird ebenfalls der Zerstäubungstrocknung unterworfen. Man erhält einen trockenen Farbstoff mit einem Feststoffgehalt von 94,7%.

c) Zur analytischen Bestimmung des Salzgehaltes wurde je eine Probe des feuchten Preßkuchens und der Syntheselösung getrocknet:

| | |
|---|---|
| — Feuchter Preßkuchen: | Trocknung im Vakuumschrank bei 80° C ergibt trockenen Farbstoff mit 99,7% Trockengehalt. |
| — Syntheselösung: | Erwärmen auf 40—50° C, Filtrieren durch ein Sieb mit 70—75 µm Maschenweite zur Entfernung von gröberen Verunreinigungen. Dann Zerstäubungstrocknung (bei 160° C Lufteingangstemperatur und 80—85° C Ausgangstemperatur). Dies ergab getrockneten Farbstoff aus der Synetheselösung mit einem Trockengehalt von 95,5%. |

In der Tabelle 1 sind die Eigenschaften des Farbstoffes aus der Syntheselösung und als feuchter Preßkuchen, jeweils vor und nach der Entsalzung durch Umkehr-Osmose (UO) aufgeführt.

Tabelle 1

| | (1) Farbstoff-Preßkuchen vor, UO | (2) Farbstoff-Preßkuchen nach, UO entsalzt | (3) Farbstoff-Syntheselösung vor, UO | (4) Farbstoff-Syntheselösung nach, UO entsalzt |
|---|---|---|---|---|
| Natriumchlorid | 13,1% | < 0,1% | 23,2% | < 0,1% |
| Natriumacetat | < 0,2% | < 0,2% | ca. 2% | < 0,2% |
| Farbstärke (spektrophotometrisch) | 581% | 639% (d. h. Erhöhung von 10%) | 473% | 646% (d. h. Erhöhung von 36,6%) |
| Farbstärke (coloristisch) | 580% | 640% (d. h. Erhöhung von 10,3%) | 485% | 645% (d. h. Erhöhung von 33%) |
| Nuance | gut | gut | gut | gut |

Mit diesen 4 Rohfarbstoffen aus derselben Synthesepartie, nämlich

- Rohfarbstoff feuchter Preßkuchen, trocken (99,7% Trockengehalt), salzhaltig = Lösung Versuch 1.
- Rohfarbstoff feuchter Preßkuchen, durch UO entsalzt, dann getrocknet (Trockengehalt 94,7%) = Lösung Versuch 2.
- Rohfarbstoff direkt aus der Syntheselösung, trocken, salzhaltig (Trockengehalt 95,5%) = Lösung Versuch 3.
- Rohfarbstoff aus der Syntheselösung durch UO entsalzt, dann getrocknet (Trockengehalt 94,9%) = Lösung Versuch 4.

wurden Lösungen mit gleicher Zusammensetzung hergestellt:

Eintragen von 37,5 Teilen Farbstoff (Trockengehalt des Pulvers nicht berücksichtigt) bei 50—60°C innert 15 Minuten in ein Gemisch, bestehend aus

| | |
|---|---|
| 10,6 Teilen | des Anlagerungsproduktes von 8 Mol Äthylenoxid an 2-Hydroxy-diphenyl, |
| 10,6 Teilen | des Kondensationsproduktes aus Kokosfettsäure mit 2 Mol Diäthanolamin (enthaltend ca. 2% emulgiertes Siliconöl als Antischaummittel und ca. 2,2% Essigsäure) |
| 63,8 Teilen | γ-Butyrolatcton |
| 63,8 Teilen | Diäthylenglykol und |
| 63,8 Teilen | Wasser. |

Nach beendetem Eintragen wird die Temperatur unter stetigem Rühren während 2 Stunden bei 50—60°C gehalten, dann das Heizbad entfernt, ohne Rühren ca. 12 Stunden stehen gelassen, dann noch 3 Stunden bei Raumtemperatur nachgerührt.

Die Lösungen wurden dann über Papierdoppelfilter (Macherey-Nagel 713, ∅ 70 mm) abgesaugt.

Tabelle 2

Daten der Lösungen

| Versuch Nr. | Ausbeute, % des Einsatzes | Rückstand auf Papierfilter, % des Farbstoffeinsatzes | Filtrierzeit (Min.) | Farbstärke gegenüber Typ | Nuance | Spritzfärbung | Färbung auf Leder |
|---|---|---|---|---|---|---|---|
| (1) | 97,8 | 0,16, graubraune Flocken | 2,5 | 93%*) | gut | gut | Spur heller |
| (2) | 96,3 | 1,18, weißgraues Pulver | 10,9 | 100% | gut | gut | Spur heller |
| (3) | 97,1 | 0,27%, graue Flocken | 6,3 | 75% | Spur trüber | gut | deutlich heller, Spur trüber |
| (4) | 96,0 | 1,19%, weißgraue Substanz | 13,3 | 100% | gut | gut | gut |

*) nach Korrektur des Trockengehaltes des Rohfarbstoffes = 89,1%.

Beispiel 8 (Applikationsbeispiel)

100 Teile der in Beispiel 2a) erhaltenen Farbstofflösung werden mit 100 Teilen Äthylenglykol-monoäthyläther und 800 Teilen Wasser zu einer Spritzlösung gemischt.

Diese Lösung wird in einer Menge von 20 bis 100 g pro Quadratmeter mittels einer Spritzpistole oder einer Spritzmaschine (z. B. versehen mit einem Rundläufer, welcher mit 4 bis 8 Pistolen besetzt ist) auf ungefärbtes Leder aufgetragen.

Man erhält so eine sehr gleichmäßige grünstichig-gelbe Färbung auf dem Leder (je nach Auftragsmenge in hellen oder satten Tönen), welche sehr gute Echtheiten, z. B. Migrationsechtheit, Wassertropfechtheit und Lösungsmittelechtheit (Aceton und Alkohol) aufweisen.

Anstelle von ungefärbtem Leder kann man die Spritzlösung auf vorgefärbtes Leder auftragen. Man erhält ebenfalls eine sehr gleichmäßige Überfärbung.

**Patentansprüche**

1. Verfahren zum Spritzfärben von Leder mit einer Farbstofflösung, dadurch gekennzeichnet, daß man eine Farbstofflösung verwendet, die erhalten wird, indem man eine wäßrige Lösung bzw. Suspension, mindestens eines anionischen Rohfarbstoffes zur Abtrennung von Salzen und Synthesenebenprodukten mit Molekulargewichten unter 500 und teilweisen Abtrennung von Wasser über eine halbdurchlässige, asymmetrische, mit polyfunktionellen monomeren oder polymeren Verbindungen modifizierten Membran mit einem cut off level von 300 bis 500 führt, gegebenenfalls trocknet, und mit 15 bis 85 Gew.-%, bezogen auf das fertige Präparat, eines mit Wasser mischbaren, organischen Lösungsmittels und gegebenenfalls weiteren Zusatzmitteln vor und/oder nach dem Durchgang durch die halbdurchlässige Membran versetzt.

2. Verfahren nach Anspruch 1, dadurch gekennzeichnet, daß man zur Herstellung der Farbstofflösung eine Membran verwendet, die aus einem Celluloseacetat-Grundgerüst besteht, das durch Umsetzung mit einer reaktive Gruppierungen aufweisenden ionischen Verbindung modifiziert ist.

3. Verfahren nach Anspruch 2, dadurch gekennzeichnet, daß die Membran als ionische Gruppen Sulfonsäure-, Carbonsäure- oder Ammoniumgruppen enthält.

4. Verfahren nach Anspruch 2, dadurch gekennzeichnet, daß die Membran als Reste mit ionischen Gruppen Reste eines wasserlöslichen Reaktivfarbstoffes enthält.

5. Verfahren nach Anspruch 1, dadurch gekennzeichnet, daß man zur Herstellung der Farbstofflösung, die mittels Membrantrennverfahren aufkonzentrierte und entsalzte Lösung des Rohfarbstoffs direkt mit dem organischen Lösungsmittel und gegebenenfalls weiteren Zusatzmitteln versetzt oder die entsalzte Lösung des Rohfarbstoffs trocknet und anschließend den getrockneten Farbstoff mit einem organischen Lösungsmittel und gegebenenfalls weiteren Zusatzmitteln versetzt.

6. Verfahren nach den Ansprüchen 1 bis 5, dadurch gekennzeichnet, daß man eine Farbstofflösung verwendet, die als mit Wasser mischbares Lösungsmittel bei Raumtemperatur flüssige, mehrwertige Alkohole oder deren Äther und/oder Ester, gegebenenfalls hydroxysubstituierte Ketone, aliphatische und cyclische Monoalkohole, cyclische Äther und Ester, Lactame, Lactone, Ester von aliphatischen Hydroxycarbonsäuren, gegebenenfalls in $\alpha$- und/oder $\beta$-Stellung durch Alkyl- oder Hydroxyalkylgruppen substituierte Derivate des 2,5-Dihydrothiophen-1,1-dioxid oder des Tetrahydrothiophen-1,1-dioxid, Dimethylsulfoxid, niedrigmolekulare aliphatische Carbonsäuren, Amide von niedrigmolekularen aliphatischen Carbonsäuren, methylierte Amide der Kohlensäure oder Phosphorsäure, Phosphor- oder Phosphonsäureester, Alkanolamine, oder deren Gemische enthält.

7. Verfahren nach Anspruch 6, dadurch gekennzeichnet, daß die Farbstofflösung als Lösungsmittel Äthylenglykol, Propylenglykol, Diäthylenglykol, Triäthylenglykol, Äthylenglykolmonoäthyläther und/oder Diäthylenglykolmonoäthyläther enthält.

8. Verfahren nach Anspruch 6, dadurch gekennzeichnet, daß die Farbstofflösung als Lösungsmittel Diacetonalkohol, $\gamma$-Butyrolacton, Tetramethylharnstoff, Dimethylsulfoxid, Hexamethylphosphorsäuretriamid und/oder Methylphosphonsäuredimethylester enthält.

9. Verfahren nach Anspruch 1, dadurch gekennzeichnet, daß die Farbstofflösung eine oberflächenaktive Substanz enthält.

10. Verfahren nach Anspruch 9, dadurch gekennzeichnet, daß die Farbstofflösung als oberflächenaktive Substanz ein Hilfsmittelgemisch, bestehend aus dem Umsetzungsprodukt von 5 Mol Äthylenoxid und 1 Mol 2-Äthylhexanol oder das Umsetzungsprodukt von 8 Mol Äthylenoxid und 1 Mol o-Phenylphenol im Gemisch mit dem Umsetzungsprodukt aus Kokosfettsäure und 2 Mol Diäthanolamin, dem Umsetzungsprodukt aus Stearinsäure und 2 Mol Diäthanolamin oder dem Ammoniumsalz des sauren Schwefelsäureesters des Anlagerungsproduktes von 2 Mol Äthylenoxid und 1 Mol p-tert. Nonylphenol enthält.

11. Verfahren nach Anspruch 1, dadurch gekennzeichnet, daß man eine Farbstofflösung verwendet, enthaltend 10 bis 60 Gew.%, vorzugsweise 15 bis 45 Gew.% mindestens eines anionischen Farbstoffes, 20 bis 80 Gew.% eines mit Wasser mischbaren Lösungsmittels, gegebenenfalls 5 bis 50 Gew.%, vorzugsweise 20 bis 30 Gew.% Wasser und gegebenenfalls 1 bis 40 Gew.%, vorzugsweise 15 bis 35 Gew.% weitere Zusätze.

12. Verfahren nach Anspruch 1, dadurch gekennzeichnet, daß man eine Farbstofflösung verwendet, deren Gehalt an anorganischem Inertsalz höchstens 1 Gew.%, vor allem höchstens 0,5 Gew.%, insbesondere höchstens 0,1 Gew.% beträgt.

13. Verfahren nach den Ansprüchen 1 bis 12, dadurch gekennzeichnet, daß man eine Farbstofflösung verwendet, die den Farbstoff der Formel

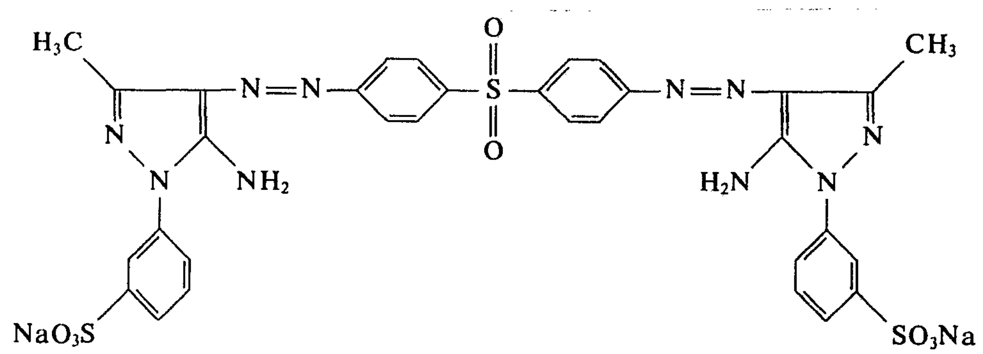

enthält.

## Claims

1. A process for spray dyeing leather with a dye solution which is obtained by passing an aqueous solution or suspension of at least one anionic crude dye over a semi-permeable, asymmetrical membrane which is modified with polyfunctional monomers or polymers and has a cut-off level of 300 to 500, in order to separate salts and synthesis by-products having molecular weights below 500 and partially to remove water, optionally drying said solution or suspension and mixing it with 15 to 80% by weight, based on the finished composition, of a watermiscible solvent and optionally further auxiliaries, before and/or after passage through the semi-permeable membrane.

2. A process according to claim 1, wherein the membrane employed for the preparation of the dye solution consists of a cellulose acetate base structure which is modified by reaction with an ionic compound containing reactive groups.

3. A process according to claim 2, wherein the membrane contains sulfonic acid, carboxylic acid or ammonium groups as ionic groups.

4. A process according to claim 2, wherein the membrane contains radicals of a water-soluble reactive dye as radicals containing ionic groups.

5. A process according to claim 1, wherein the dye solution is prepared by mixing the solution of the crude dye which has been concentrated and desalted by the membrane separation process direct with the organic solvent and optionally further auxiliaries, or drying the desalted solution of the crude dye and subsequently mixing the dried dyke with an organic solvent and optionally further auxiliaries.

6. A process according to any one of claims 1 to 5, wherein the dye solution employed contains as water-miscible solvent one of the following materials which are liquid at room temperature: polyhydric alcohols or their ethers or esters, ketones which can be substitued by hydroxyl groups, aliphatic and cyclic monoalcohols, cyclic ethers and esters, lactams, lactones, esters of aliphatic hydroxycarboxylic acids, derivatives of 2,5-dihydrothiophene-1,1-dioxide or of tetrahydrothiophene-1,1-dioxide, which derivatives can be substituted in the $\alpha$- and/or $\beta$-position by alkyl or hydroxyalkyl groups, dimethyl sulfoxide, low-molecular aliphatic carboxylic acids, amides of low molecular aliphatic carboxylic acids, methylated amides of carbonic acid or phosphoric acid, phosphoric acid esters, phosphonic acid esters, alkanolamines, or mixtures of the above.

7. A process according to claim 6, wherein the dye solution contains as solvent: ethylene glycol, propylene glycol, diethylene glycol, triethylene glykol, ethylene glycol monoethyl ether and/or diethylene glycol monoethyl ether.

8. A process according to claim 6, wherein the dye solution contains as solvent: diacetone-alcohol, $\gamma$-butrolactone, tetramethylurea, dimethyl sulfoxide, hexamethylphosphoric triamide and/or dimethyl methylphosphonate.

9. A process according to claim 1, wherein the dye solution contains a surface-active substance.

10. A process according to claim 23, wherein the dye solution contains as surfactant a mixture of assistants, consisting of the reaction product of 5 moles of ethylene oxide with 1 mole of 2-ethylhexanol, or the reaction product of 8 moles of ethylene oxide with 1 mole of o-phenylphenol, mixed with the reaction product of coconut fatty acid and 2 moles of diethanolamine, the reaction product of stearic acid and 2 moles of diethanolamine or the ammonium salt of the acid sulfuric acid ester of the addition product of 2 moles of ethylene oxide with 1 mole of p-tert-nonylphenol.

11. A process according to claim 1, which comprises the use of a dye solution which contains 10 to 60% by weight, preferably 15 to 45% by weight, of at least one anionic dye, 20 to 80% by weight of a water-miscible solvent, optionally 5 to 50% by weight, preferably 20 to 30% by weight, of water, and optionally 1 to 40% by weight, preferably 15 to 35% by weight, of further auxiliaries.

12. A process according to claim 1, which comprises the use of a dye solution having a content of inorganic inert salt of not more than 1% by weight, preferably of not more than 0.5% by weight and, most preferably, of not more than 0.1% by weight.

13. A process according to any one of claims 1 to 12, which comprises the use of a dye solution which contains the dye of the formula

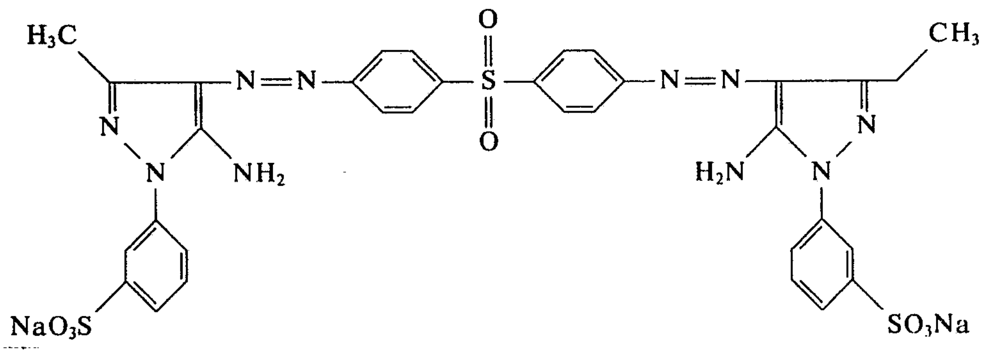

**Revendications**

1. Procédé pour la teinture du cuir par pulvérisation avec une solution de colorant, caractérisé par le fait qu'on utilise une solution de colorant qui est obtenue en faisant passer sur une membrane semi-perméable, asymétrique, modifiée avec des composés monomères ou polymères polyfonctionnels et ayant un seuil de coupure de 300 à 500, une solution ou une suspension aqueuse d'au moins un colorant brut anionique pour séparer les sels et les sous-produits de synthèse ayant des poids moléculaires inférieurs à 500 et pour séparer partiellement l'eau, éventuellement en séchant et en ajoutant 15 à 85% en poids par rapport à la préparation terminée d'un solvant organique miscible avec l'eau et éventuellement d'autres additifs avant et/ou après le passage à travers la membrane semi-perméable.

2. Procédé selon la revendication 1, caractérisé par le fait qu'on utilise pour la préparation de la solution de colorant une membrane qui est constituée par un squelette de base en acétate de cellulose qui est modifié par réaction avec un composé ionique comportant des groupements réactifs.

3. Procédé selon la revendication 2, caractérisé par le fait que la membrane contient comme groupes ioniques, des groupes acide sulfonique, acide carboxylique ou ammonium.

4. Procédé selon la revendication 2, caractérisé par le fait que la membrane contient comme restes comportant des groupes ioniques, des restes d'un colorant réactif soluble dans l'eau.

5. Procédé selon la revendication 1, caractérisé par le fait que pour la préparation de la solution de colorant, on ajoute à la solution du colorant brut concentré et dessalinisé par un procédé de séparation sur membrane, directement un solvant organique et éventuellement d'autres additifs, ou bien qu'on sèche la solution du colorant brut dessalinisée puis qu'au colorant sec on ajoute un solvant organique et éventuellement d'un additifs.

6. Procédé selon les revendications 1 à 5, caractérisé par le fait qu'on utilise une solution de colorant qui contient comme solvants miscibles avec l'eau des alcools polyvalents ou leurs éthers et/ou leurs esters liquides à la température ture ambiante, des cétones éventuellement substituées par un groupe hydroxyle, des monoalcools aliphatiques et cycliques, des éthers et des esters cycliques, des lactames, des lactones, des esters d'acides hydroxycarboxyliques aliphatiques, des dérivés du 2,5-dihydrothiophène-1,1-dioxyde ou du tétrahydrothiophène-1,1-dioxyde éventuellement substitué sur les positions $\alpha$ et/ou $\beta$ par des groupes alkyle ou hydroxyalkyle, le diméthylsulfoxyde, des acides carboxyliques aliphatiques à bas poids moléculaire, des amides d'acides carboxyliques aliphatiques à bas poids moléculaire, des amides méthylés de l'acide carbonique ou de l'acide phosphorique, des esters phosphoriques ou phosphoniques, des alcanolamines, ou leurs mélanges.

7. Procédé selon la revendication 6, caractérisé par le fait que la solution de colorant contient comme solvant, l'éthylèneglycol, le propylèneglycol, le diéthylèneglycol, le triéthylèneglycol, l'éther monoéthylique de l'éthylèneglycol et/ou l'éther monoéthylique du diéthylèneglycol.

8. Procédé selon la revendication 6, caractérisé par le fait que la solution de colorant contient comm solvant, le diaétone-alcool, la $\gamma$-butyrolactone, la tétraméthylurée, le diméthylsulfoxyde, l'hexaméthylphosphoryltriamide et/ou le méthylphosphonate de diméthyle.

9. Procédé selon la revendication 1, caractérisé par le fait que la solution de colorant contient une substance tensioactive.

10. Procédé selon la revendication 9, caractérisé par le fait que la solution de colorant contient comme substance tensioactive un mélange d'adjuvants constitué par le produit de réaction de 5 moles d'oxyde d'éthylène et de 1 mole de 2-éthylhexanol ou bien le produit de réaction de 8 moles d'oxyde d'éthylène et de 1 mole de o-phénylphénol en mélange avec le produit de réaction des acides gras du coco et de 2 moles de diéthanolamine, le produit de réaction de l'acide stéarique et de 2 moles de diéthanolamine ou avec le sel d'ammonium de l'ester sulfurique acide du produit d'addition de 2 moles d'oxyde d'éthylène sur 1 mole de p-tert-nonylphénol.

11. Procédé selon la revendication 1, caractérisé par le fait qu'on utilise une solution de colorant contenant 10 à 60% en poids, de préférence 15 à 45% en poids, d'au moins un colorant anionique, 20 à 80% en poids d'un solvant miscible avec l'eau, éventuellement 5 à 50% en poids, de préférence 20 à 30% en poids d'eau et éventuellement 1 à 40% en poids, de préférence 15 à 35% en poids d'autres additifs.

12. Procédé selon la revendication 1, caractérisé par le fait qu'on utilise une solution de colorant dont la teneur en sel inerte minéral est au maximum de 1% poids, surtout au maximum de 0,5% en poids, en particulier au maximum de 0,1% en poids.

13. Procédé selon les revendications 1 à 12, caractérisé par le fait qu'on utilise une solution de colerant qui contient le colorant ayant la formule: